# FASCICULE DE BREVET EUROPEEN

(11) **EP 1 773 655 B1**
(45) Date de publication et mention de la délivrance du brevet: **07.11.2007**
(21) Numéro de dépôt: 05783807.0
(22) Date de dépôt: 27.06.2005
(51) Int. Cl.: B64C 13/04, B64C 13/46, G05G 5/08, G05G 7/04, G09B 9/28

(54) **DISPOSITIF DE RESTITUTION ARTIFICIELLE D'EFFORT ANTAGONISTE POUR UN DISPOSITIF DE COMMANDE A DISTANCE DE GOUVERNES D'UN AERONEF**
VORRICHTUNG FÜR ENTGEGENWIRKENDE KÜNSTLICHE STEUERKRAFT FÜR EIN FLUGZEUGSTEUERFLÄCHENFERNSTEUERGERÄT
DEVICE FOR ANTAGONISTIC ARTIFICIAL FORCE GRADIENT FOR AN AIRCRAFT CONTROL SURFACE REMOTE CONTROL DEVICE

(30) Priorité: 29.06.2004 FR 0407168
(43) Date de publication de la demande: 18.04.2007
(73) Titulaire: Sagem Défense Sécurité, 75015 Paris (FR)
(72) Inventeur: HORS, Daniel, F-92800 Puteaux (FR); JONCOUR, Yvon, F-95520 Osny (FR)
(74) Mandataire: Gorrée, Jean-Michel
(86) Numéro de dépôt international: PCT/FR2005/001622
(87) Numéro de publication internationale: WO 2006/010842

(56) Documents cités:
- EP-A- 0 659 640
- US-A- 2 394 384
- US-A- 2 695 145
- US-A- 4 069 720
- US-A- 5 513 543

## Description

La présente invention concerne le domaine de la commande à distance de gouvernes d'un aéronef, tel qu'avion, hélicoptère, ..., et elle concerne plus spécifiquement des perfectionnements apportés à de tels dispositifs, couramment dénommés manche à balai, prévus pour la commande des gouvernes de gauchissement (roulis) et/ou de profondeur (tangage) ; elle concerne encore plus spécifiquement des perfectionnements s'appliquant plus particulièrement, bien que non exclusivement, à des dispositifs dont le manche est de petite dimension (minimanche) et est associé structurellement à un accoudoir de manière à pouvoir être actionné avec le bras reposant sur l'accoudoir, par simples rotations du poignet seul.

Un dispositif de commande du type concerné par l'invention comprend un organe d'actionnement (poignée, pédale) propre à pivoter autour d'un axe de part et d'autre d'une position neutre et à commander une modification de la voilure de l'aéronef en gauchissement et/ou en profondeur, et à cet effet il peut pivoter autour de deux axes en principe perpendiculaires (montage du type Cardan). Les systèmes de commande de type mécanique ou hydraulique génèrent de façon structurellement intrinsèque des efforts résistants qui sont perçus par le pilote lorsqu'il déplace le manche. Par contre, dans les systèmes de commande de type électrique ou électronique, il n'existe aucun effort antagoniste généré naturellement et il est nécessaire d'adjoindre un dispositif annexe, associé à la commande principale, propre à générer un effort résistant, perceptible par l'utilisateur, en fonction du déplacement angulaire de l'organe d'actionnement.

Par ailleurs, les mouvements de rotation du poignet ne s'effectuent pas de façon symétrique vers la droite et vers la gauche. Or c'est précisément le déplacement du minimanche vers la droite ou vers la gauche qui commande les gouvernes de gauchissement. Il est donc nécessaire de constituer le dispositif de commande de manière que le gauchissement de l'aéronef demeure indépendant de l'asymétrie physiologique des mouvements de rotation du poignet du pilote.

Le document US 2 695 145 montre un dispositif selon le préambule de la revendication 1.

L'invention a pour objet de proposer un dispositif perfectionné qui soit mieux adapté, et notamment plus compact, que les dispositifs actuels à des courbes de réponses diverses et/ou asymétriques, ces perfectionnements pouvant trouver une application préférée bien que non exclusive en conjonction avec les minimanches de pilotage.

A ces fins, l'invention propose un dispositif de restitution artificielle d'effort antagoniste pour un dispositif de commande à distance de gouvernes d'un aéronef, ledit dispositif comprenant un organe d'actionnement propre à pivoter autour d'un axe en entraînant un arbre rotatif, qui, étant agencé selon l'invention, se caractérise en ce qu'il comprend :
- un premier doigt, fixe, parallèle audit arbre et supporté à distance radiale dudit arbre,
- un second doigt solidaire dudit arbre rotatif et parallèle à celui-ci, ce second doigt étant supporté à sensiblement même distance radiale dudit arbre que le premier doigt,
- un plateau supporté à la même distance radiale que les premier et second doigts et s'étendant latéralement aux deux doigts,
- un premier ressort interposé entre le premier doigt fixe et le plateau, et
- un second ressort interposé entre le second doigt mobile et le plateau.

Grâce à ces dispositions, le dispositif peut occuper trois positions fonctionnelles, à savoir :
- une position neutre occupée en l'absence d'effort exercé sur l'organe d'actionnement, pour laquelle le plateau est maintenu en appui latéralement simultanément contre les deux doigts (qui sont de préférence mutuellement alignés) sous l'action de précontrainte des deux ressorts,
- une position pivotée dans un premier sens à partir de la position neutre avec un angle variable, pour laquelle le second doigt mobile est entraîné, par rapport au premier doigt fixe, à l'opposé du plateau et est soumis à l'effort de rappel du second ressort interposé entre ledit second doigt et le plateau, et
- une position pivotée dans un second sens, opposé au précédent, à partir de la position neutre avec un angle variable, pour laquelle le second doigt mobile est entraîné, par rapport au premier doigt fixe, du côté du plateau en entraînant celui-ci et est soumis à l'effort de rappel du premier ressort interposé entre le premier doigt et le plateau.

En particulier et de préférence, il est possible de prévoir que les deux ressorts possèdent des raideurs différentes : ainsi, l'effort résistant peut être rendu différent selon le sens de déplacement de l'organe d'actionnement et il devient notamment possible d'adapter l'effort résistant en fonction du sens de rotation du poignet du pilote ayant en main un minimanche.

Eventuellement, si cela est désiré, il est possible de prévoir qu'au moins un des ressorts possède une raideur variable en fonction de sa déformation, de telle sorte que le pilote ressente la position de l'organe de commande (proximité de fin de course par exemple) ou perçoive le franchissement d'un ou plusieurs seuils prédéterminés, ou percoive un effort résistant progressivement variable.

De façon pratique, il est avantageux, pour constituer un dispositif plus compact, que les deux ressorts soient des ressorts de torsion, notamment hélicoïdaux, disposés coaxialement autour de l'arbre.

Dans un mode de réalisation préféré, le plateau et les deux ressorts situés de part et d'autre de celui-ci sont constitués sous forme d'un ensemble unitaire. Il devient alors possible de faire en sorte que le plateau et les deux ressorts situés de part et d'autre de celui-ci soient constitués sous forme d'une pièce monobloc, les ressorts étant usinés dans la masse.

Comme cela ressort de ce qui précède, les dispositions conformes à l'invention qui viennent d'être exposées trouvent une application intéressante dans le cas où l'organe d'actionnement est un manche ou poignée actionnable manuellement, tout particulièrement du type dit minimanche, et notamment lorsqu'il est fonctionnellement associé à la commande des gouvernes de gauchissement.

La structure du dispositif conforme à l'invention offre également cet avantage supplémentaire d'autoriser, par une motorisation du doigt fixe, une fonction active de l'organe d'actionnement qui, en mode de pilotage automatique, peut suivre les évolutions de l'aéronef commandé par le calculateur ou par le pilote (cas de l'organe d'actionnement du co-pilote non utilisé). A cet effet, on prévoit que le dispositif comporte des moyens motorisés de déplacement fonctionnellement associés au doigt fixe et propres à modifier la position du doigt fixe.

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- la figure 1 est une représentation très schématique, en perspective, d'un dispositif agencé conformément à l'invention ;
- la figure 2 est une vue de dessus du dispositif de la figure 1, montré dans une première position fonctionnelle ;
- les figures 2A et 2B sont des vues simplifiées analogues à celle de la figure 2, illustrant respectivement deux autres positions fonctionnelles ;
- la figure 3 est une vue analogue à celle de la figure 1 montrant une variante de réalisation motorisée
- la figure 4 est une vue simplifiée analogue à celle de la figure 2A illustrant une variante de réalisation ; et
- les figures 5A, 5B et 5C sont des représentations graphiques de courbes de réponse susceptibles d'être obtenues avec diverses réalisations de dispositifs conformes à l'invention.

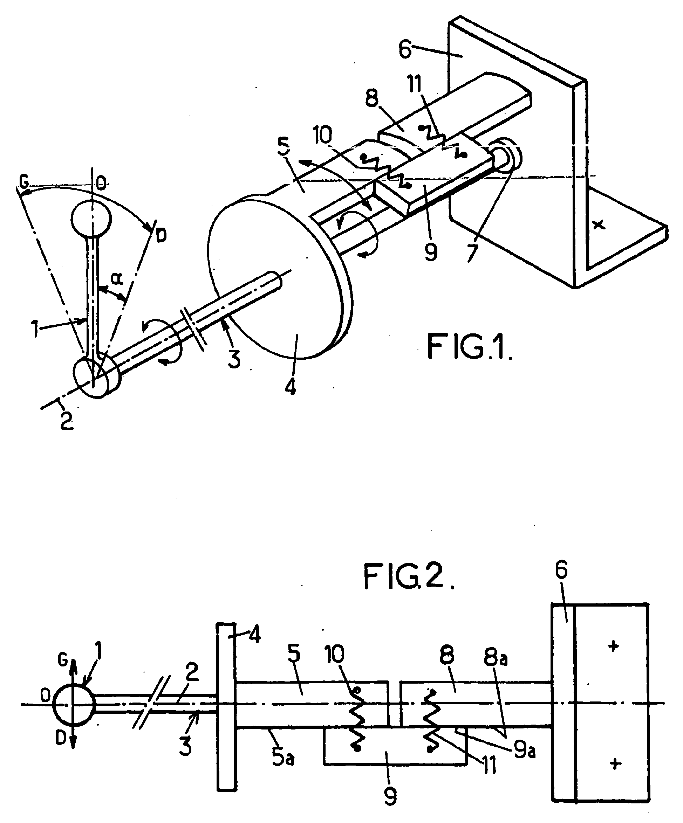

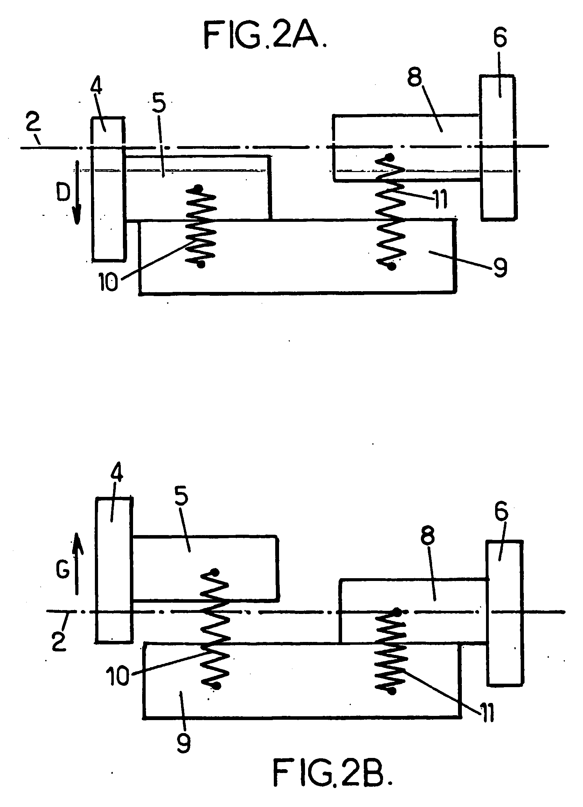

Sur les figures 1 et 2 auxquelles on se reporte tout d'abord, il est représenté très schématiquement les éléments constitutifs d'une structure de base d'un dispositif de restitution artificielle d'effort antagoniste destiné à être fonctionnellement associé à un dispositif de commande à distance de gouvernes d'un aéronef et agencé conformément à l'invention. Il doit être précisé ici que la partie de commande à distance proprement dite n'entre pas dans le champ de l'invention et n'a donc pas été illustrée, et que seuls ont été illustrés les éléments ou parties concernés par l'invention, à savoir l'organe d'actionnement ainsi que les éléments ou parties propres à une restitution artificielle d'effort antagoniste lorsque l'opérateur (le pilote de l'aéronef) déplace angulairement l'organe d'actionnement pour agir sur une gouverne de l'aéronef dans l'hypothèse où cette commande ne présente pas d'effort antagoniste propre (cas d'une commande électrique par exemple).

Dans ces conditions, le pilote a à sa disposition un organe d'actionnement 1 qui peut être une pédale ou un manche de pilotage. Le manche 1 est mobile en rotation autour d'un axe 2 en entraînant d'une part les commandes des gouvernes respectives et, d'autre part, un arbre 3 du dispositif de restitution d'effort, lequel arbre 3 peut, comme illustré dans l'exemple de la figure 1, être coaxial audit axe 2, ou être parallèle à celui-ci. L'arbre 3 est solidaire d'un flasque 4 coaxial portant, par exemple à sa périphérie ou au voisinage de sa périphérie, un doigt d'entraînement (ou premier doigt) 5 parallèle à l'arbre 3.

Une partie fixe de bâti, représenté sous forme d'un flasque 6 fixe, supporte l'extrémité de l'arbre 3 dans un palier 7 et supporte également un doigt fixe (ou second doigt) 8 qui s'étend parallèlement à l'arbre 3. Dans le mode de réalisation préféré montré aux figures 1 et 2, le doigt 8 est situé en regard du doigt mobile 5 quand le dispositif est dans la position neutre illustrée à la figure 1 et dont il sera question plus loin.

Un plateau 9 est situé d'un côté des deux doigts 5 et 8, en regard simultanément de l'un et de l'autre. Dans la position illustrée aux figures 1 et 2, le plateau 9 a son bord 9a tourné vers les bords respectivement 5a et 8a, en regard, des deux doigts 5 et 8 qui est conformé pour être au contact desdits bords des doigts. Dans un mode de réalisation simple, les bords des deux doigts 5 et 8 qui sont tournés du côté du plateau 9 sont en alignement mutuel, de sorte que le bord correspondant du plateau 9 est un bord sensiblement rectiligne. Le plateau 9 peut être supporté de toute manière souhaitable (glissières, bras rotatif articulé sur l'arbre 3, ...) de manière à pouvoir tourner autour de l'arbre 3 à distance de celui-ci.

Un premier ressort 10 de rappel est fixé au premier doigt 5 et au plateau 9 et un second ressort 11 de rappel est fixé au second doigt 8 et au plateau 9 (sur les figures 1 et 2, les deux ressort 10 et 11 de rappel ont été schématisés sous forme respectivement de deux ressorts hélicoïdaux d'étendue transversale).

En l'absence d'effort exercé sur le manche 1 (position de repos ou position neutre repérée par O et illustrée aux figures 1 et 2), les deux ressorts 10 et 11 précontraignent les doigts 5 et 8 et le plateau 9 au contact les uns des autres.

On comprend, d'après ce qui précède, que la mise en oeuvre de la structure qui vient d'être décrite et en présence de la précontrainte conférée par les ressorts conduit à une absence totale de jeu, ce qui confère une grande fiabilité au dispositif.

Si le manche 1 est dévié par exemple vers la droite (D sur les figures 1, 2 et 2A), le doigt mobile 5 solidaire du flasque 4, lui-même solidaire de l'arbre 3, est déplacé transversalement à l'axe 2 ; il entraîne le plateau 9 et écarte celui-ci du doigt fixe 8 à l'encontre de l'effort de rappel du ressort 11 (figure 2A).

Si le manche 1 est dévié maintenant vers la gauche (G sur les figures 1, 2 et 2B), le doigt mobile 5 est déplacé par le flasque 4, mais sans entraîner le plateau 9 qui reste bloqué par le doigt fixe 8 ; ainsi le doigt mobile 5 est déplacé transversalement à l'axe 2 à l'encontre de l'effort de rappel du ressort 10 (figure 2B) .

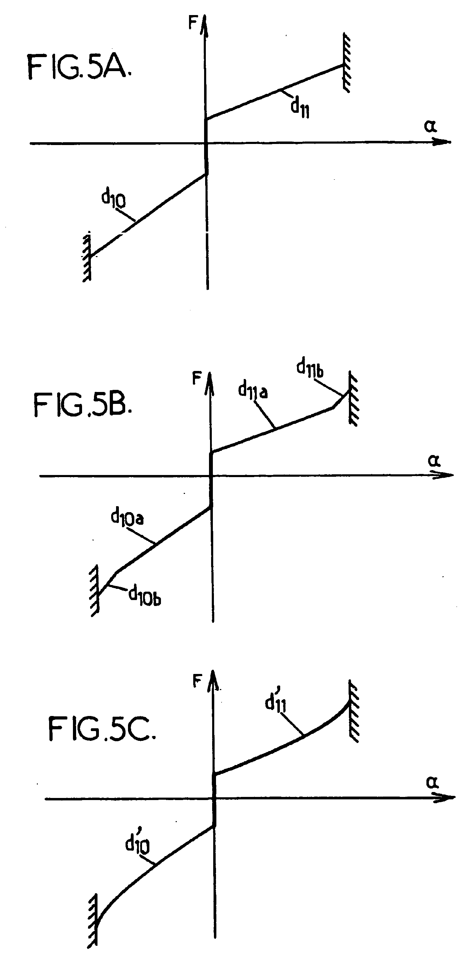

Sur les figures 2A et 2B (ainsi plus loin que sur la figure 4), on a assimilé les déplacements angulaires du doigt mobile 5 et du plateau 9 à des déplacements linéaires.

Une application tout particulièrement, bien que non exclusivement, visée pour le dispositif conforme à l'invention tel qu'il vient d'être décrit concerne la commande de gauchissement de la voilure d'un aéronef à l'aide d'un manche du type dit "minimanche", cette commande étant obtenue en déplaçant le minimanche angulairement dans un plan transversal à l'axe 2 comme illustré à la figure 1, c'est-à-dire de la droite vers la gauche ou inversement. Dans le cas d'un minimanche, l'avant-bras de l'opérateur reposant sur un accoudoir, les mouvements de rotation du poignet vers la droite et vers la gauche ne sont pas symétriques en raison de la dissymétrie ergonomique en effort présentée par le poignet et de ce fait la commande de gauchissement de la voilure risque de ne pas être effectuée symétriquement vers la droite et vers la gauche.

Grâce au dispositif agencé selon l'invention, il est possible de remédier de façon simple à cet inconvénient en mettant en oeuvre deux ressorts 10 et 11 ayant des raideurs différentes. La courbe de réponse du dispositif est alors asymétrique comme cela apparaît clairement à la figure 5A sur laquelle les efforts F sont portés en ordonnées et les déplacements angulaires α du minimanche 1 sont portés en abscisses. La pente du segment de droite d₁₁, situé à droite, traduisant la raideur du ressort 11 est plus faible que la pente du segment de droite d₁₀, situé à gauche, traduisant la raideur du ressort 10.

On comprend aussi que l'agencement conforme à l'invention offre la possibilité de procurer des courbes de réponse de toute forme souhaitable, c'est-à-dire non seulement des courbes de réponse à pentes inégales comme montré à la figure 5A, mais aussi, si cela est désiré pour des applications spécifiques, des courbes de réponse à pentes multiples inégales comme montré à la figure 5B en d₁₁ₐ et d_{11b} et en d₁₀ₐ et d_{10b}, voire des courbes de réponse au moins en partie à variations curvilignes avec variations inégales comme montré à la figure 5C en d'₁₁ et en d'₁₀. L'homme du métier connaît la manière d'obtenir de telles courbes de réponse par exemple par assemblage structurel de ressorts à raideurs différentes, par mise en oeuvre de ressorts à caractéristiques non constantes, ....

Dans une mise en oeuvre préférée de l'invention, les ressorts 10 et 11 sont réalisés sous forme de ressorts de torsion, avantageusement sous forme de ressorts hélicoïdaux disposés l'un à la suite de l'autre et entourant l'arbre 3 coaxialement à celui-ci.

Pour simplifier l'assemblage du dispositif, il est avantageux de concevoir l'ensemble formé par les deux ressorts 10, 11 et le plateau 9 sous forme d'un ensemble unitaire préconstitué et mis en place en bloc.

Un manière préférée de mettre en oeuvre cette dernière disposition consiste à prévoir que le plateau 9 et les deux ressorts 10, 11 soient constitués unitairement sous forme d'une seule et même pièce monobloc en acier à ressort, les ressorts 10, 11 étant usinés dans la masse.

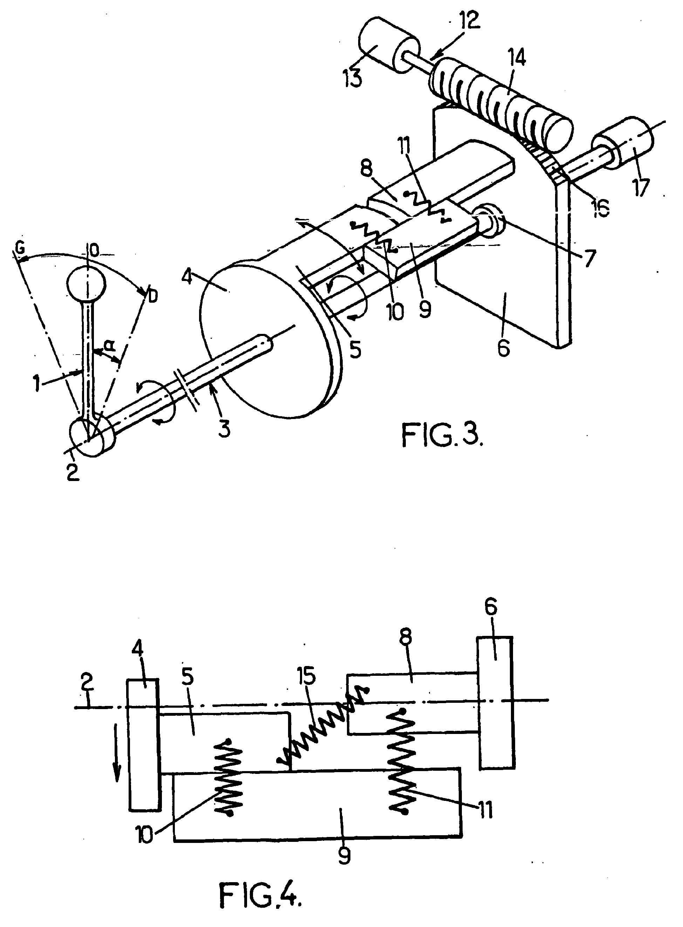

L'agencement qui vient d'être exposé du dispositif conforme à l'invention permet d'envisager une version motorisée qui soit sécurisante. Une motorisation directe de l'organe d'actionnement 1 ne pourrait pas s'avérer satisfaisante car elle devrait être en mesure de surmonter les efforts de précontrainte des ressorts et, par ailleurs, ne serait pas sécuritaire dans le cas d'une panne du moteur du type dit "embarquement" (le moteur fonctionne aléatoirement). Par contre une solution intéressante consiste à déplacer la référence de position neutre, autrement dit à motoriser le doigt 8 de référence en position. A cet effet, on peut envisager, comme illustré à la figure 3, de constituer le flasque 6 sous forme mobile, c'est-à-dire pivotant autour de l'arbre 3. Un exemple de réalisation peut consister, comme montré à la figure 3, à prévoir des moyens de déplacement 12 pour mouvoir le flasque 6, lesquels moyens de déplacement 12 peuvent comprendre un moteur 13 entraînant une vis sans fin 14 qui engrène avec un bord denté 16, arrondi coaxialement à l'arbre 3, du flasque 6 dont est solidaire le doigt 8. De façon souhaitable, un capteur 17 de position angulaire, fonctionnellement associé à l'arbre 3 (par exemple cale sur l'arbre 3), est inclus dans un circuit de recopie.

Un tel agencement à doigt 8 motorisé provoque, par déplacement de la référence de position, une activation de l'organe d'actionnement 1 et permet donc une fonction active dudit organe 1 qui, en mode de pilotage automatique (ou second manche non utilisé), pourrait suivre les évolutions de l'aéronef commandé par le calculateur ou le pilote (cas du manche co-pilote). Une telle structure est sécurisante car, en cas de panne du type "embarquement" (fonctionnement aléatoire du moteur), une reprise est possible à travers la loi d'effort des ressorts et le pilote peut contrer les mouvements intempestifs dus au moteur.

Il ressort clairement de la description précédente que, dans l'application préférée du dispositif conforme à l'invention, l'organe d'actionnement est un manche ou poignée 1 actionnable manuellement, notamment du type minimanche manoeuvrable par rotation du poignet vers la droite ou la gauche à partir d'une position neutre centrale, pour la commande des gouvernes de gauchissement de la voilure de l'aéronef.

Notamment dans le cas de cette application préférée plus spécialement envisagée, il est possible de prévoir, à titre de sécurité en cas de rupture de la pièce 13 (par exemple d'un des ressorts 10, 11) qui rendrait le manche 1 fou, un accouplement élastique, indépendant du plateau 9, entre les deux doigts 5 et 8. On peut à cet effet envisager un ressort additionnel 15 entre les doigts 5 et 8 comme illustré à la figure schématique 4 : le ressort additionnel 15 monté diagonalement entre les deux doigts 5 et 8 génère une composante transversale de force de rappel qui tend à rappeler les deux doigts dans leur situation mutuelle occupée dans la position neutre du dispositif. Le ressort 15 peut avoir une raideur faible et ne perturbe pas le fonctionnement normal du dispositif.

## Revendications

1. Dispositif de restitution artificielle d'effort antagoniste pour un dispositif de commande à distance de gouvernes d'un aéronef, ledit dispositif comprenant un organe d'actionnement (1) propre à pivoter autour d'un axe (2) en entraînant un arbre rotatif (3),
**caractérisé en ce qu'**il comprend :
- un premier doigt (8), fixe, parallèle audit arbre (3) et supporté à distance radiale dudit arbre (3),
- un second doigt (5) solidaire dudit arbre rotatif (3) et parallèle à celui-ci, ce second doigt (5) étant supporté à sensiblement même distance radiale dudit arbre (3) que le premier doigt (8),
- un plateau (9) supporté à la même distance radiale que les premier et second doigts (8, 5) et s'étendant latéralement aux deux doigts (8, 5),
- un premier ressort (11) interposé entre le premier doigt fixe (8) et le plateau (9), et
- un second ressort (10) interposé entre le second doigt (5) mobile et le plateau (9),
ce grâce à quoi le dispositif peut occuper trois positions fonctionnelles, à savoir :
- une position neutre occupée en l'absence d'effort exercé sur l'organe d'actionnement (1), pour laquelle le plateau (9) est maintenu en appui latéralement simultanément contre les deux doigts (8, 5) sous l'action de précontrainte des deux ressorts (11, 10),
- une position pivotée dans un premier sens à partir de la position neutre avec un angle (α) variable, pour laquelle le second doigt (5) mobile est entraîné, par rapport au premier doigt (8) fixe, à l'opposé du plateau (9) et est soumis à l'effort de rappel du second ressort (10) interposé entre ledit second doigt (5) et le plateau (9), et
- une position pivotée dans un second sens, opposé au précédent, à partir de la position neutre avec un angle (α) variable, pour laquelle le second doigt (5) mobile est entraîné, par rapport au premier doigt (8) fixe, du côté du plateau (9) en entraînant celui-ci et est soumis à l'effort de rappel du premier ressort (11) interposé entre le premier doigt (8) et le plateau (9) .

2. Dispositif selon la revendication 1, **caractérisé en ce que** les deux ressorts (10, 11) ont des raideurs différentes.

3. Dispositif selon la revendication 1 ou 2, **caractérisé en ce qu'**au moins un des ressorts (10, 11) possède une raideur variable en fonction de sa déformation.

4. Dispositif selon l'une quelconque des revendications 1 à 3, **caractérisé en ce que** les deux ressorts (10, 11) sont des ressorts de torsion disposés coaxialement autour de l'arbre (3).

5. Dispositif selon la revendication 4, **caractérisé en ce que** les deux ressorts (10, 11) sont hélicoïdaux.

6. Dispositif selon l'une quelconque des revendications 1 à 5, **caractérisé en ce que** le plateau (9) et les deux ressorts (10, 11) situés de part et d'autre de celui-ci sont constitués sous forme d'un ensemble unitaire.

7. Dispositif selon les revendications 5 et 6, **caractérisé en ce que** le plateau (9) et les deux ressorts (10, 11) situés de part et d'autre de celui-ci sont constitués sous forme d'une pièce (13) monobloc, les ressorts (10, 11) étant usinés dans la masse.

8. Dispositif selon l'une quelconque des revendications 1 à 7, **caractérisé en ce qu'**en position neutre, les premier et second doigts (8, 5) sont sensiblement mutuellement alignés.

9. Dispositif selon l'une quelconque des revendications 1 à 8, **caractérisé en ce que** l'organe d'actionnement est un manche ou poignée (1) actionnable manuellement.

10. Dispositif selon la revendication 9, **caractérisé en ce que** l'organe d'actionnement (1) est du type dit minimanche.

11. Dispositif selon l'une quelconque des revendications 1 à 10, **caractérisé en ce qu'**il comporte des moyens motorisés de déplacement (12) fonctionnellement associés au doigt fixe (8) et propres à modifier la position du doigt fixe (8).

12. Dispositif selon l'une quelconque des revendications 1 à 11, **caractérisé en ce qu'**il est fonctionnellement associé à la commande des gouvernes de gauchissement de la voilure de l'aéronef.

## Claims

1. A device for artificially restoring opposing force for a device for remotely controlling aircraft control surfaces, said device comprising an actuator member (1) suitable for pivoting about an axis (2) while entraining a rotary shaft (3),
**characterized in that** it comprises:
- a stationary, first finger (8) parallel to said shaft (3) and supported at a radial distance from said shaft (3);
- a second finger (5) secured to said rotary shaft (3) and parallel thereto, said second finger (5) being supported at substantially the same radial distance from said shaft (3) as the first finger (8);
- a slab (9) supported at the same radial distance as the first and second fingers (8, 5) and extending beside the two fingers (8, 5);
- a first spring (11) interposed between the stationary, first finger (8) and the slab (9); and
- a second spring (10) interposed between the moving, second finger (5) and the slab (9); whereby the device can occupy three functional positions, namely:
- a neutral position occupied in the absence of any force being exerted on the actuator member (1), in which the slab (9) is held pressed laterally simultaneously against both fingers (8, 5) under the action of prestress of the two springs (11, 10);
- a position pivoted in a first direction away from the neutral position through a variable angle (α), in which the moving, second finger (5) is entrained relative to the stationary, first finger (8) away from the slab (9) and is subjected to the return force of the second spring (10) interposed between said second finger (5) and the slab (9); and
- a position pivoted in a second direction, opposite to the preceding direction, away from the neutral position through a variable angle (α) , in which the moving, second finger (5) is entrained relative to the stationary, first finger (8) towards the slab (9), entraining it therewith, and is subjected to the return force from the first spring (11) interposed between the first finger (8) and the slab (9).

2. A device according to claim 1, **characterized in that** the two springs (10, 11) have stiffnesses that are different.

3. A device according to claim 1 or claim 2, **characterized in that** at least one of the springs (10, 11) has stiffness that is variable as a function of its deformation.

4. A device according to any one of claims 1 to 3, **characterized in that** the two springs (10, 11) are torsion springs disposed coaxially around the shaft (3).

5. A device according to claim 4, **characterized in that** the two springs (10, 11) are helical springs.

6. A device according to any one of claims 1 to 5, **characterized in that** the slab (9) and the two springs (10, 11) situated on either side thereof are constituted as a unitary assembly.

7. A device according to claims 5 and 6, **characterized in that** the slab (9) and the two springs (10, 11) situated on either side thereof are constituted as an integral piece (13), the springs (10, 11) being machined from the block.

8. A device according to any one of claims 1 to 7, **characterized in that** the first and second fingers (8, 5) are substantially in mutual alignment when in the neutral position.

9. A device according to any one of claims 1 to 8, **characterized in that** the actuator member is a manually-actuatable knob or stick (1).

10. A device according to claim 9, **characterized in that** the actuator member (1) is of the so-called mini-stick type.

11. A device according to any one of claims 1 to 10, **characterized in that** it includes motor-driven displacement means (12) functionally engaged with the stationary finger (8) and adapted for modifying the position of the stationary finger (8).

12. A device according to any one of claims 1 to 11, **characterized in that** it is functionally associated with controlling the roll (banking) control surfaces of the wing of the aircraft.

## Patentansprüche

1. Vorrichtung zur künstlichen Erzeugung einer Gegenkraft für eine Fernsteuerungsvorrichtung für Steuerruder eines Luftfahrzeugs, wobei diese Vorrichtung ein Betätigungsorgan (1) umfasst, das geeignet ist, um eine Achse (2) zu schwenken und dabei eine Drehwelle (3) mitzunehmen,
**dadurch gekennzeichnet,**
**dass** sie umfasst:
- einen ersten Finger (8), der feststehend, parallel zu dieser Welle (3) und in radialem Abstand zu dieser Welle (3) angebracht ist,
- einen zweiten Finger (5), der mit dieser Welle (3) fest verbunden ist und parallel zu dieser verläuft, wobei dieser zweite Finger (5) in im Wesentlichen gleichem radialen Abstand zu dieser Welle (3) wie der erste Finger (8) angebracht ist,
- eine Platte (9), die in dem gleichen radialen Abstand wie der erste und der zweite Finger (8, 5) angebracht ist und sich seitlich von den beiden Fingern (8, 5) erstreckt,
- eine erste Feder (11), die zwischen dem ersten, feststehenden Finger (8) und der Platte (9) angeordnet ist, und
- eine zweite Feder (10), die zwischen dem zweiten, bewegbaren Finger (5) und der Platte (9) angeordnet ist,
so dass die Vorrichtung drei Betriebsstellungen einnehmen kann, und zwar:
- eine neutrale Stellung, die sie einnimmt, wenn keine Kraft auf das Betätigungsorgan (1) ausgeübt wird, wofür die Platte (9) unter der Vorspannungs-Einwirkung der beiden Federn (11, 10) seitlich in Anlage an beiden Fingern (8, 5) zugleich gehalten wird,
- eine Schwenkstellung in einer ersten Richtung von der neutralen Stellung aus mit einem variablen Winkel (α), wofür der zweite, bewegbare Finger (5) gegenüber dem ersten feststehenden Finger (8) von der Platte (9) fortbewegt und der Rückstellkraft der zweiten Feder (10), die zwischen diesem zweiten Finger (5) und der Platte (9) angeordnet ist, ausgesetzt wird, und
- eine Schwenkstellung in einer zweiten Richtung von der neutralen Stellung aus, die entgegengesetzt zur ersten verläuft, mit einem variablen Winkel (α), wofür der zweite, bewegbare Finger (5) gegenüber dem ersten, feststehenden Finger (8) zur Platte (9) hinbewegt wird und diese dabei mitnimmt, und der Rückstellkraft der ersten Feder (11), die zwischen dem ersten Finger (8) und der Platte (9) angeordnet ist, ausgesetzt wird.

2. Vorrichtung nach Anspruch 1,
**dadurch gekennzeichnet,**
**dass** die beiden Federn (10, 11) unterschiedliche Steifigkeiten aufweisen.

3. Vorrichtung nach Anspruch 1 oder 2,
**dadurch gekennzeichnet,**
**dass** mindestens eine der Federn (10, 11) eine Steifigkeit aufweist, die variabel in Abhängigkeit von ihrer Verformung ist.

4. Vorrichtung nach einem der Ansprüche 1 bis 3,
**dadurch gekennzeichnet,**
**dass** die beiden Federn (10, 11) Torsionsfedern sind, die koaxial um die Welle (3) angeordnet sind.

5. Vorrichtung nach Anspruch 4,
**dadurch gekennzeichnet,**
**dass** die beiden Federn (10, 11) Spiralfedern sind.

6. Vorrichtung nach einem der Ansprüche 1 bis 5,
**dadurch gekennzeichnet,**
**dass** die Platte (9) und die auf deren beiden Seiten befindlichen beiden Federn (10, 11) in Form einer Gesamteinheit gebildet sind.

7. Vorrichtung nach den Ansprüchen 5 und 6,
**dadurch gekennzeichnet,**
**dass** die Platte (9) und die auf deren beiden Seiten befindlichen beiden Federn (10, 11) in Form eines einteiligen Werkstücks (13) gebildet sind, wobei die Federn (10, 11) aus der Masse herausgearbeitet sind.

8. Vorrichtung nach einem der Ansprüche 1 bis 7,
**dadurch gekennzeichnet,**
**dass** in der neutralen Stellung der erste und der zweite Finger (8, 5) im Wesentlichen aufeinander ausgerichtet sind.

9. Vorrichtung nach einem der Ansprüche 1 bis 8,
**dadurch gekennzeichnet,**
**dass** das Betätigungsorgan ein Steuerhebel oder Handgriff (1) ist, der manuell zu bedienen ist.

10. Vorrichtung nach Anspruch 9,
**dadurch gekennzeichnet,**
**dass** das Betätigungsorgan (1) ein sogenannter Mini-Steuerhebel ist.

11. Vorrichtung nach einem der Ansprüche 1 bis 10,
**dadurch gekennzeichnet,**
**dass** sie motorgetriebene Mittel zum Verschieben (12) aufweist, die mit dem feststehenden Finger (8) funktional verbunden sind und geeignet sind, die Stellung des feststehenden Fingers (8) zu modifizieren.

12. Vorrichtung nach einem der Ansprüche 1 bis 11,
**dadurch gekennzeichnet,**
**dass** sie mit der Steuerung der Seitenruder des Leitwerks des Luftfahrzeugs funktional verbunden ist.
